# EUROPEAN PATENT SPECIFICATION

(11) **EP 0 034 178 B1**
(45) Date of publication and mention of the grant of the patent: **05.02.1986**
(21) Application number: 80901764.3
(22) Date of filing: 28.07.1980
(51) Int. Cl.: B32B 31/00, B24B 1/00, C08G 18/00, G02C 7/02

(54) **OPHTHALMIC LENS BLANK WITH PROTECTIVE COATING**
OPHTHALMISCHER LINSENROHLING MIT SCHÜTZENDEM ÜBERZUG
EBAUCHE DE LENTILLE OPHTALMIQUE AVEC REVETEMENT PROTECTEUR

(30) Priority: 29.08.1979 US 70891
(43) Date of publication of application: 26.08.1981
(73) Proprietor: MINNESOTA MINING AND MANUFACTURING COMPANY, St. Paul, Minnesota 55133-3427 (US)
(72) Inventor: ERSFELD, Dean A., St. Paul, MN 55133 (US); SANDVIG, Timothy C., St. Paul, MN 55133 (US)
(74) Representative: Baillie, Iain Cameron
(86) International application number: US8000958
(87) International publication number: WO8100536

## Description

### Background Art

The present invention relates to the protection of ophthalmic lens blanks during handling and processing to impart the desired optical correction thereto.

In making finished ophthalmic lenses, particularly prescription lenses for eyeglasses, it is customary to begin with lens blanks made from glass or plastic. These blanks are semi-finished lenses which have a finished, polished front surface and an unfinished back surface. Typically, the blanks have no protective covering on the finished surface so that they are subject to damage during handling by being scratched, chipped, etc.

The blanks are altered or surfaced to a particular prescription by grinding material from the unfinished back surface followed by fining and polishing so that they acquire the optical refractive properties specified in the prescription.

It is essential that a lens be held accurately and securely during the surfacing operation. However, common clamping techniques, such as mounting the lens in a vise orthe jaws of a chuck, are unsuitable for holding the lens because material is typically removed from the entirety of the back surface. Thus, it is necessary that the lens be held by an adhesive means which secures it by the front or finished face in the appropriate position in the grinding machine. This is accomplished by "blocking" the lens. The most common means of blocking is to adhere a rigid lens block to the lens by means of a fusible metal alloy.

The alloys are applied in a molten state and subsequently allowed to harden to form a rigid layer of predetermined size and shape that bonds the lens to the lens block. While the alloy conforms well to the compound surface of the lens blank, the strength of the bond between the alloy and the lens blank is low. Consequently, primers are needed to obtain an adequate bond between the alloy and the lens. Additionally, this type of use of the molten alloys offers no protection for the finished surface of the lens blank against scratching or chipping.

Moreover, the need for priming causes certain problems. For example, the primers are applied in solution. Consequently, the lens blank must be set aside to allow the solvent to evaporate before the alloy may be applied thereto and surfacing can proceed. This causes inconvenience and delay in processing the lens blanks.

Other techniques of blocking lens blanks have also been tried. Thus, sticky substances, such as pitch or wax, double-sided sticky constructions such as pads or foams coated on each face with adhesive, and epoxy adhesives have been used. These means have not proven entirely satisfactory. For example, the residue left by pitch, wax and adhesive requires extensive clean-up of both the lens and the block. This causes delay and added expense to the processing operation. Additionally, these techniques provide less rigid mounting means that do the alloy bonded blocks. Consequently, it is more difficult to assure that the lens will be properly positioned throughout the entire surfacing process.

Pads or foams are typically opaque, so that it is difficult to properly align the lens in the surfacing apparatus. Additionally, the pads and foams are not conformable to the compound curvatures of a lens face. Thus, wrinkles, folds, air bubbles and other discontinuities between the lens blank and the pad or foam are present when they are employed.

None of the aforementioned blocking techniques provide protection for the finished surface of a lens blank subsequent to manufacture of the blank and prior to the completion of the surfacing operation. Consequently, during the handling and processing operations, the lens blanks are subject to many forces which can damage the finished surface thereby rendering the lens blank useless for ophthalmic lenses.

The present invention overcomes these disadvantages. It provides a radiation polymerizable composition.on the finished surface of lens blank which, in its polymerized form, firmly bonds the fusible metal alloy to the lens blank. Moreover, the radiation polymerizable compositions conform exactly to the compound surface of the lens blank. Thus, they follow the curvature of the lens blanks without any wrinkles, air bubbles, or other discontinuities. Consequently, these compositions are useful with both single vision and multifocal lens blanks. Still further, the compositions are translucent and preferably transparent. Consequently, they permit light to pass therethrough so that the lens may be visually aligned in the appropriate surfacing. Still further, when the polymerized compositions useful in the present invention are removed from the lens blanks and metal alloy, they leave virtually no residue. Thus, messy and time-consuming cleaning operations are avoided.

Despite this clean removability, the polymerized compositions useful in the present invention exhibit excellent adhesion to both the lens blanks and the alloys. These bonds are sufficiently strong to withstand the shear forces encountered during the surfacing operation. As a result, lenses are held in accurate position throughout this operation.

An added benefit of the present invention is the protection given to the lenses by the polymerized compositions. They protect the lenses from physical damage, and thermal and mechanical shock. Protection from physical damage is important because it reduces the loss of lenses due to chipping, scratching, etc. Thermal protection is important because, in the case of plastic ophthalmic lenses, it is possible for heat distortion to occur in the lens blank when the molten fusible metal alloy or other hot material makes contact with it. The resultant thermal distortion in the completed lens will show aberrations from the desired prescription in those areas where distortion occurs. However, when the polymerized compositions useful in the invention are employed, they offer a significant degree of protection from thermal distortion.

### Disclosure of Invention

In accordance with the present invention there is provided an article comprising an ophthalmic lens blank that has a finished surface with a polymerized layer of an oligomeric composition on said surface, wherein said oligomeric composition is selected from the group consisting of
a) an oligomer that has an amorphous segment at at least two radiation-polymerizable functionalities; and
b) a mixture of (i) an oligomer that has an amorphous segment and one radiation-polymerizable functionality and (ii) a radiation-polymerizable organic material that has at least two radiation-polymerizable functionalities;

wherein the amorphous segment of said oligomers has a weight average molecular weight in the range of 500 to 5,000, a glass transition temperature of less than about 300 K and a crystallinity, as determined by X-ray diffraction, of less than 25% by weight.

Also provided herein is a process of altering the unfinished surface of a semi-finished ophthalmic lens. This method comprises the steps of
applying a coating of an oligomeric composition to the finished surface of said lens, wherein said composition is selected from
   a) an oligomer that has an amorphous segment at at least two radiation-polymerizable functionalities; and
   b) a mixture of (i) an oligomer that has an amorphous segment and one radiation-polymerizable functionality and (ii) a radiation-polymerizable organic material that has at least two radiation-polymerizable functionalities; wherein the amorphous segment of said oligomers has a weight average molecular weight in the range of 500 to 5,000, a glass transition temperature of less than about 300°K and a crystallinity as determined by X-ray diffraction of less than 25% by weight;
exposing said oligomeric composition to radiation for a time and at an intensity to cause said composition to polymerize on said finished surface;
aligning said lens on a rigid lens block through the polymerized layer of oligomeric composition so that said lens is properly positioned for alteration;
securing said lens block to said polymerized layer of oligomeric composition in said aligned condition; and
altering the unfinished surface of said ophthalmic lens.

The oligomeric compositions useful in the present invention may be used on both plastic and glass lens blanks. Moreover, they may be employed on lens blanks that vary in curvature from piano to 10-base curve or higher. Still further the radiation curable compositions may be used on both single vision and multi-focal lenses.

As it is used herein, the term radiation polymerizable functionality refers to a functionality that will react under the influence of radiant energy to bring about the formation of a higher molecular weight material.

### Brief Description of Drawings

The invention will be described in more detail hereinafter with reference to the accompanying drawings wherein like reference characters refer to the same parts throughout the views and wherein:
Figure 1 is a side sectional view of an ophthalmic lens blank that has a layer of polymerized oligomeric composition thereon; and
Figure 2 is a side sectional view of the embodiment of Figure 1 that has a layer of fusible metal alloy on the polymerized layer and a rigid lens block on the layer of fusible metal alloy.

### Detailed Description

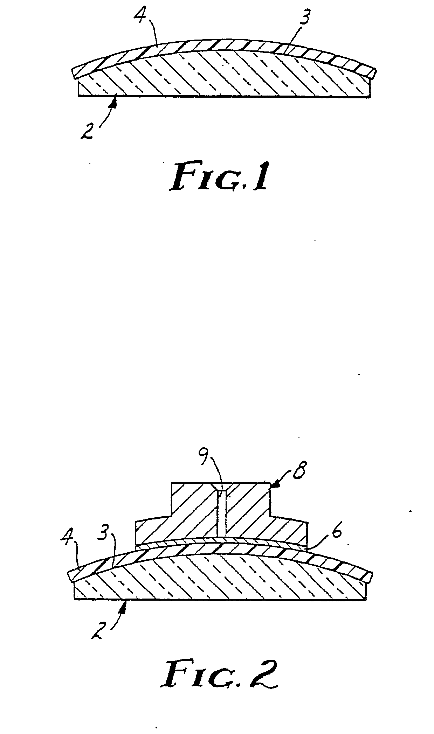

Referring now specifically to Figure 1, there is shown an ophthalmic lens blank 2 with a layer 4 of polymerized oligomeric composition on its finished surface 3. The polymerized layer 4 is the polymerized product of the oligomeric composition described above.

The oligomeric composition may be applied to the surface of the lens blank using conventional coating techniques. It is then exposed to radiation for a time and at an intensity sufficient to cause the composition to polymerize in situ.

As described above, the oligomer comprises an amorphous segment and one or more radiation polymerizable functionalities. The amorphous segment generally comprises a polymeric segment such as polyester, a polysiloxane, a polyacrylate, a polyether or a polyolefin. The segment may be derived from the corresponding mono- or polyol or a mono- or polyamine. The polyol is preferably a diol or a triol.

The radiation-polymerizable functionalities are groups which are addition-polymerizable when exposed to activating radiation. Suitable radiation-polymerizable functionalities include, for example, acrylyl, methacrylyl, allyl, vinyl and epoxy groups.

The radiation polymerizable functionalities may be a part of the amorphous segment. However, they preferably are joined to the amorphous segment by a connecting group. The connecting group is typically a urethane group or an ester group.

The prefered oligomeric compositions for use in the present invention are urethane oligomeric compositions that have amorphous segments connected to at least two addition-polymerizable groups in one molecule. These oligomers may be represented by the structure 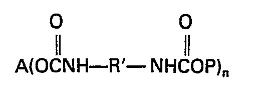 wherein A is an amorphous segment as defined above that is, for example, the residue (after substitution for -OH) of an amorphous oligomeric polyol having the formula A(OH)ₙ; n is a number having a value of up to 7; R' is the residue of an oligomeric diisocyanate having the formula R¹(NCO)₂; and P is a moiety having an additionpolymerizable group selected from acrylyl, methacrylyl, allyl, vinyl and vic-epoxy groups.

The most prefered radiation-polymerizable compositions are urethane oligomers wherein A is an amorphous polyester segment. Examples of such oligomers may be represented by the formulae 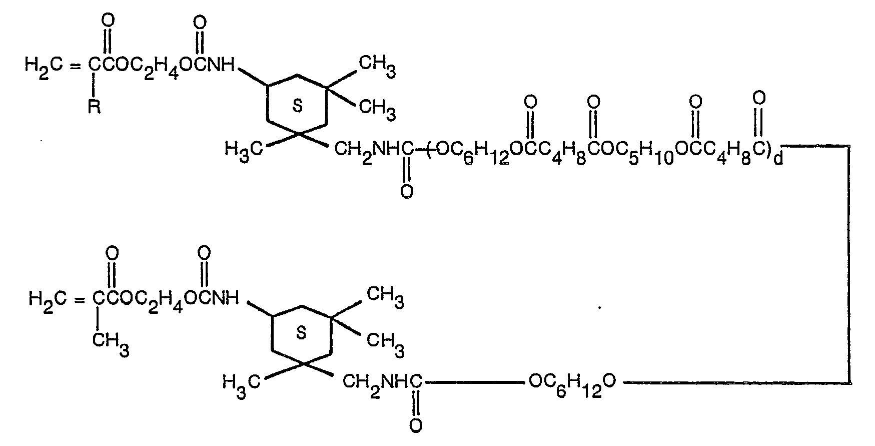 wherein R is hydrogen or methyl and d has an average value of from 0.5 to 7; 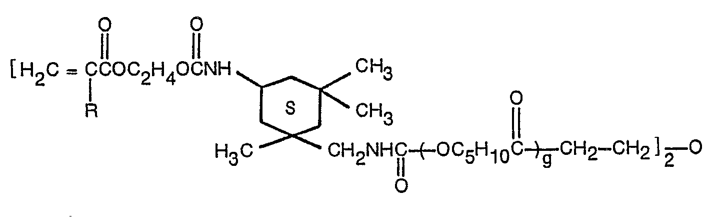 wherein R is hydrogen or methyl and g has an average value of from 1 to 3;

Other useful oligomers include Uvithane^{@} 783, 788 and 881. These materials are commercially available from the Thiokol Corporation. Uvithane® 783 is believed to have essentially the structure

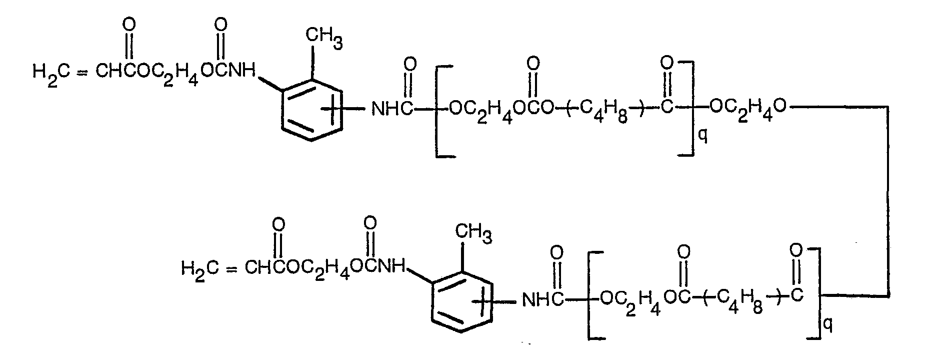

The structure for Uvithane^{@} 788 is believed to be essentially 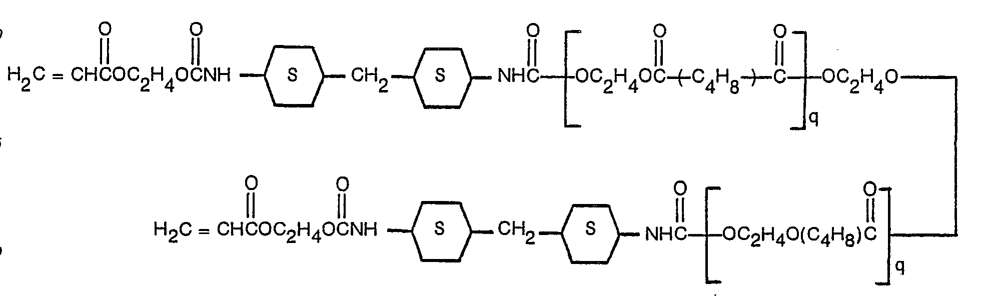 In each of the latter two formulae, q is believed to have an average value of from 1 to 2. More specifically, q is believed to be 1.25 for Uvithane^{@} 783 and 1-1.5 Uvithane^{@} 788.

Still other useful radiation-polymerizable oligomers are known and include such materials as the polyesterurethane acrylates disclosed in U.S. Patent 3,641,199 and U.S. Patent 3,907,574; and polyaceto- neurethane acrylates such as those disclosed in U.S. Patent 3,700,643; the poly(alkylenether)urethane acrylates such as those disclosed in U.S. Patent 3,448,171, U.S. Patent 3,850,770, U.S. Patent 3,907,865 and U.S. Patent 3,954,584; the poly(oxydihydrocarbylsilene) urethane acrylates such as those disclosed in U.S. Patent 3,577,262; and the polyolefineurethane acrylates such as the polybutadieneurethane acrylates disclosed in U.S. Patent 3,678,014 and the polypentadieneurethane acrylates disclosed in U.S. Patent 3,866,111.

Still other useful radiation polymerizable oligomers include such materials as the polyene-polythiols such as those described in U.S. Patent 3,908,039, U.S. Patent 3,976,553 and U.S. Patent 4,017,371; the triazine-containing polyene-polythiols such as those described in U.S. Patent 3,900,594; and the urethane polythiols such as those described in U.S. Patent 3,984,456.

Typically the radiation-polymerizable oligomers are prepared by nucleophilic condensation or addition reaction between species selected from amines, alcohols, and thiols, and epoxides with acylating compounds, e.g., isocyanates, carboxylic acids, esters and anhydrides, and derivatives thereof such as esters, anhydrides, and carbonyl halides.

In the event that the oligomer contains an amorphous segment and only one radiation-polymerizable functionality, a second material is employed in the composition. This material comprises a radiation- polymerizable organic material that has at least two radiation-polymerizable functionalities. These organic materials may be monomeric or polymeric. Typically they comprise from about 5 to 120 parts by weight per 100 parts by weight of the oligomer.

Materials useful as the radiation-polymerizable organic material are known. They include such materials as poly(olefinically unsaturated) compounds that have acrylic, methacrylic, allyl and vinyl substitution. Such compounds are well known and are described in many patents including, for example, U.S. Patents 3,833,384; 3,885,964; and 4,037,021. Preferred compounds of this type are the polyacrylate and polymethacrylate esters of alkane polyols. Examples of such compounds are hexanediol diacrylate, pentaerythritol tetraacrylate tris(2-methacryl-oxy-ethyl) isocyanurate, tris(2-acryioxy-ethyi)isocyanurate, 2-hydroxy-3-acryloxypropyl-4-acryl-oxybenzoate, pentaerythritol triacrylate, trimethylol propane trimethacrylate, neopentylglycol triacrylate, 1,3,5-tri(2-methacryloxy-ethyl)-s-triazine.

Other suitable compounds include diallyl phthalate, diallyl phosphate, diallyl adipate and divinyl succinate.

Polyethylenically unsaturated oligomeric compounds can also be used. These materials include, for example, the polyester acrylates and the methacrylates described in U.S. Patent No. 3,633,599 and U.S. Patent No. 3,759,808; the polyoxyalkylene acrylates and methacrylates disclosed in U.S. Patent 3,890,273; and the polyester urethane acrylates disclosed in U.S. Patent 3,641,199 and 3,907,574; and the polycaprol- actoneurethane acrylates and methacrylates described in U.S. Patent 3,700,643. These polyethylinically unsaturated oligomeric compounds are the same type of compounds that are useful as the oligomer that has an amorphous segment and at least two radiationpolymerizable functionalities. These materials may be used in conjunction with an oligomer that has an amorphous segment and only one radiation- polymerizable functionality.

Several techniques are useful in bringing about polymerization of the oligomeric composition. Thus polymerization may be brought on by exposure to electron beam, ultraviolet light, visible light, and heat. Exposure to laser beam and X-ray may also be employed to bring about polymerization of the oligomeric composition. No matter which radiation technique is employed, oxygen is preferably excluded during the exposure.

When the radiation is provided by electron beam, it is not necessary to include an activating ingredient in the radiation polymerizable composition. Electron beam processors are known. Examples of such processors include the Electro-Curtain@ II series available from Energy Sciences, Incorporated and Dynamitron E.B.X. available from Radiation Dynamics, Incorporated. Other suitable electron beam processors are known and are described in Modern Plastics, January 1979 at pages 72-74.

When the activating radiation is other than electron beam, it is generally necessary to include in the composition a source of free radicals, i.e., a material which liberates free radicals on exposure to radiation. Such free radical sources are well known and are described in the art. Thus see, for example, Chapter II of "Photochemistry" by Calvert and Pitts, John Wiley & Sons (1966).

Included among free-radical sources are the conventional heat activated compounds such as organic peroxides and organic hydroperoxides. Representative examples of these materials are benzoyl peroxide, tertiary-butyl perbenzoate, cumene hydroperoxide, azobis(isobutyronitrile) and the like.

When the radiation is ultraviolet light, suitable sources of free radicals include such compounds as acyloin and derivatives thereof, e.g. benzoin, benzoin methyl ether, benzoin isopropyl ether, benzoin isobutyl ether, and a-methylbenzoin, diketones, e.g., benzil and diacetyl, etc.; organic sulfides, e.g., diphenyl monosulfide, diphenyl disulfide, decyl phenyl sulfide, and tetramethylthiuram monosulfide; S-acyl dithiocarbamates, e.g., S-benzoil-N,N-dimethyldithiocarbamate; phenones, e.g. acetophenone, a,a,a-tribromoacetophenone, a,a-diethoxyacetophenone, 2,2-dimethoxy-2-phenylacetophenone, 2,2-dimethoxy-2-acetophenone, o-nitroa,a,a-tribromoacetophenone; benzophenone, and p,p'tetramethyl- diaminobenzophenone; 3,4-dichloromethylbenzophenone sulfonyl. halides, e.g., p-toluenesulfonyl chloride, 1-naphthalenesulfonyl chloride.

Other ingredients may also be employed in the present invention. They include extenders, flow control agents, colorants and so forth. The quantities of these ingredients is not critical to the present invention provided that they do not interfere with the polymerization of the oligomeric composition and further provided that they do not render the polymerized oligomeric composition opaque. Representative examples of useful extenders include vinyl acetate, glycidyl methacrylate, 3-methacryloxypropyltrimethoxysilane (such as A-174 from Union Carbide Coporation), glycidyldimeth- acrylates, glycidyldiacrylates, allyl glycidyl ether and methacrylic acid and other carboxyl functional materials.

Flow control agents are also useful in the oligomeric compositions. These agents may also be referred to as leveling agents. They are used to level ridges formed in the coating during the coating process. Flow control agents which have been found useful in the practice of the present invention include "SF-1023", a silicon based surfactant available from General Electric; "FC-430" and "FC-431" fluorocarbon-based surfactants available from Minnesota Mining and Manufacturing Company.

Colorants are also useful in the practice of the present invention. However, they must not interfere with the translucency of the oligomeric composition. Rather, they must permit light to pass through the oligomeric layer so that the lens may be properly aligned during the surface generating process described hereinafter.

The oligomeric compositions useful in the present invention are easily applied to ophthalmic lens blanks. They may be applied to the front or finished surface of a lens blank by a variety or techniques known to the art including brushing, spraying, roll coating, curtain coating, etc. After application to the finished surface of the lens, the compositions are exposed to radiation for a time and at an intensity sufficient to cause them to polymerize. The various radiation techniques employed include those discussed previously. Preferably the compositions are applied so that they cover the entire finished surface of the lens. The cured compositions typically have a thickness in the range of about 20 to 500 micrometers.

After application and polymerization of the oligomeric composition, the lens blank may then be blocked. This may be accomplished by means of conventional blocking techniques using devices developed for this purpose. Representative examples of blocking devices are the Optek Blocker available from the Optek Division of Associated Development Corporation and the Coburn Blocker available from the Coburn Company. In each of these devices, the lens is first aligned on the rigid block through the polymerized layer of oligomeric composition so that the lens is properly positioned for alteration. These alignment techniques are well known. A molten fusible metal alloy is then injected into a cavity provided between the coated lens and the block.

After the alloy has solidified and cooled, the blocked lens is removed from the blocking device and is ready for mounting in a surfacing machine. This machine alters the unfinished surface of the lens and imparts the desired optical correction to the lens. This is done by a grinding operation. After alteration, the surface is fined and polished. The now finished lens may then be deblocked by, for example, means of a sharp tap. The lens may also be deblocked by melting the alloy in, for example, hot water. The polymerized oligomeric compsition is then removed from the lens and discarded. The composition, upon removal from the lens, does not leave any residue thereon. Consequently, clean-up of the lens is avoided. Additionally, the polymerized oligomeric composition does not leave any residue on the metal alloy. Consequently, the metal alloy also does not need to be cleaned after removal from the composition.

Figure 2 shows a side sectional view of an ophthalmic lens blank which has had its finished surface coated with an oligomeric composition and which in turn has been blocked as described above. Thus, this figure shows a semi-finished lens blank 2 that has a finished surface 3 thereon. A layer of polymerized oligomeric composition 4 covers finished surface 3. A rigid lens block 8 is attached to layer 4 by means of a fusible metal alloy 6. The lens block 8 has a channel 9 therethrough for injecting molten metal alloy into the cavity between layer 4 and block 8.

The present invention is further exemplified in the following examples. These examples employ various oligomers which are described hereinafter.

### Oligomer Preparation

### Oligomer A

A 19 liter glass-lined retractor was charged with 16.3 moles isophorone diisocyanate and 1.5 g dibutyltin dilaurate. The mixture was heated to 70°C and 8.2 moles of Inolex 1400-120 (a polyester prepared from adipic acid, neopentyl glycol, and 1,6-hexanediol, weight average molecular weight of 874, available from Inolex Corporation) was added over a four-hour period. During this time, the temperature of the mixture rose to 80°C and then dropped to 70 to 75°C. Heating was discontinued but the mixture was stirred overnight. The mixture was then heated to 70°C and 1.5 g of dibutyltin dilaurate was added. Hydroxyethyl methacrylate 16.3 moles was then added over a period of one and one-half hours. An ultraviolet light absorber (lrganox 1010 available from Ciba Geigy Corporation, 25.1 g) was then added and the mixture heated at 60°C for about 15 hours until the infrared absorption at 4.28 micrometers was gone. The resulting oligomer has essentially the structure 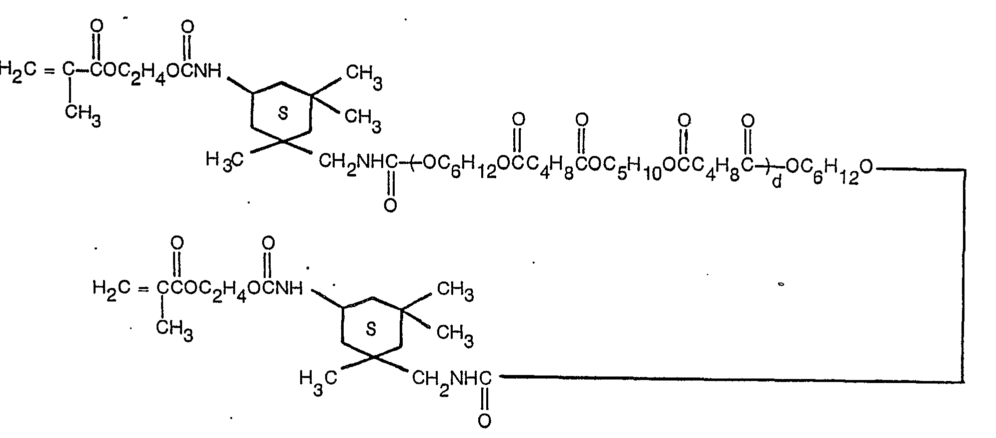 The average value of d was about 1.6.

### Oligomers B and C

The procedure employed to prepare Oligomer A was repeated except that Inolex 1400-90 and Inolex 1400-35 were utilized in place of Inolex 1400-120 respectively. The resulting oligomers had essentially the same structure as shown for Oligomer A except that d had an average value of about 2.3 for Oligomer B and 6.4 for Oligomer C.

### Oligomer D

The procedure employed to prepare Oligomer A was repeated except that hydroxyethyl acrylate was used in place of hydroxyethyl methacrylate and Inolex 1400-220 was used in place of Inolex 1400-120. The resulting oligomer had essentially the structure 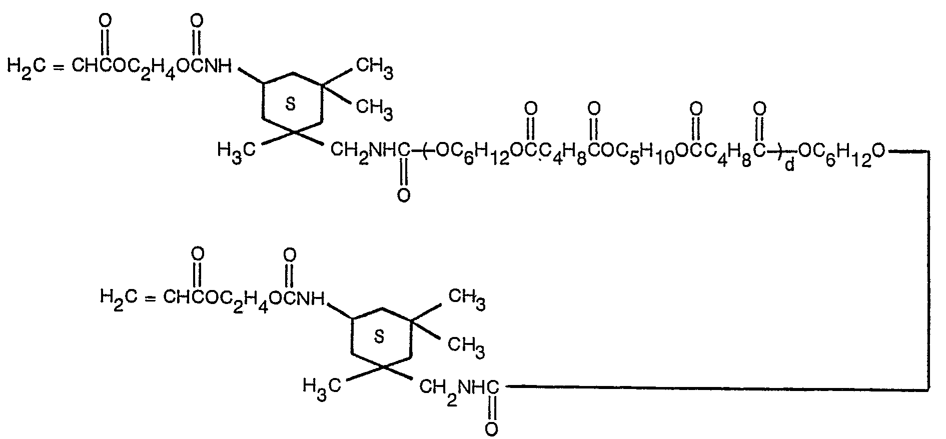 The average value of d was about 0.8.

### Oligomer E

The procedure employed to prepare Oligomer A was repeated except that the Inolex 1400-120 was replaced by PCP 0210 (a polycaprolactonediol, weight average molecular weight of 830, available from Union Carbide Company). The resulting oligomer has essentially the structure 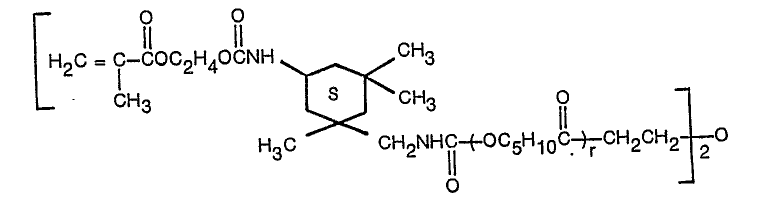 the average value of r was about 3.25.

### Oligomer F

A three liter flask was charged with 3.0 moles of isophorone diisocyanate and 0.1 g stannous chloride. The mixture was stirred for about 10 minutes and heated to 70°C whereupon 0.4 g of3,4-epoxycyclohexylmethyl-3,4-epoxycyclohexanecarboxylate (ERL 4221 from Union Carbide Company) and 1.5 moles PCP 0200 (a polycaprolactone from Union Carbide Company) was added. The epoxy and polycaprolactone were added slowly over a period of 4 hours during which time the mixture was stirred and heated at a temperature of about 70 to 75°C. Mixing and heating were continued for about one hour after addition was complete. At this point, infrared analysis indicated that the mixture has an isocyanate number of 563. Stannous chloride (0.2 g in 1.0 g oftetrahydrofuran) was added. Distilled 2-hydrdxyethyl methacrylate (3.04 mole) that contained 0.8 g of ERL 4221 was then added over a period of about 3-1/2 hours. During the addition, dry air was bubbled through the mixture which was stirred and held at 70 to 75°C. The mixture was stirred at this temperature for an additional 15 hours, at which point an infrared analysis indicated the absence of isocyanate. The resulting oligomer had essentially the same structure as that of Oligomer E except that the average value of r was about 1.86.

### Oligomer G & H

Oligomers G & H comprises Uvithane^{@} 783 and 788 respectively. These materials were commercially available from Thiokol Corporation. Their respective structures were believed to be

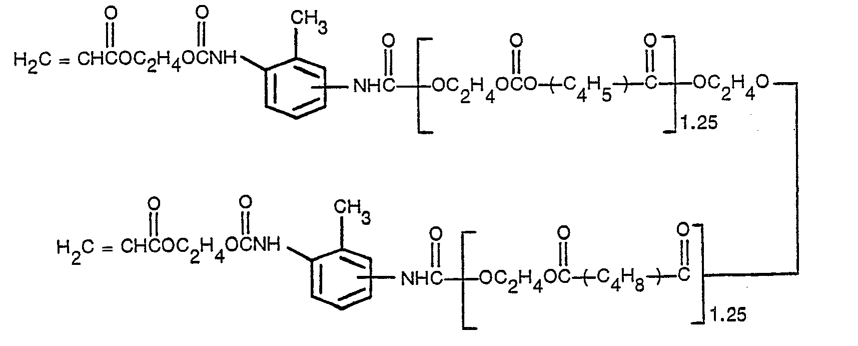

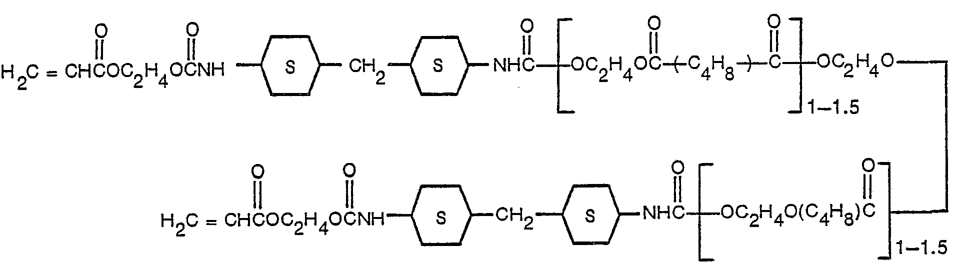

### Oligomer I

A one gallon can was charged with 0.59 mole of polyester having an average hydroxyl functionality of 3.4 (Inolex 1831-65 from the Inolex Corporation), 3.2 g dibutyltin dilaurate, and 3.4 moles isophorone diisocyanate. The isocyanate was added over a 15 minute period so as to prevent the exotherm from exceeding 60°C. The ingredients were mixed for approximately 45 minutes at a temperature of about 55°C, after which 5 moles of hydroxyethyl methacrylate that contained 6.3 g Irganox 1010 was gradually added. Cooling was employed to keep the reaction temperature under 70°C. After all of the hydroxyethyl methacrylate had been added, the mixture was held at 74°C for about 2 hours and then cooled to room temperature and the resulting oligomer recovered.

### Oligomer J

Oligomer J comprised Uvithane^{O} 881, commercially available from Thiokol Corporation. This material was believed to contain 22 mole % hydroxyethyl acrylate groups, 18.3 mole % dicyclohexylmethane diisocyanate groups, 29.2 mole % adipic acid groups and 30.5 mole % ethylene glycol groups. It also contained a reactive diluent believed to be N-vinylpyrrolidone.

### Example 1

A lens-coating composition was prepared by mixing the following ingredients together:

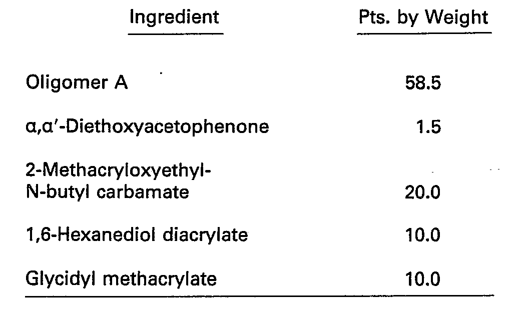

The coating composition was applied to the convex surface of ophthalmic polycarbonate lens blanks and then cured in situ by exposing it to ultraviolet light in a PPG QC Processor having two 80 watt/cm medium pressure mercury lamps. A nitrogen atmosphere was maintained in the Processor. The coated lenses were passed through the Processor twice at a rate of 12 m/min.

Some of the lenses were blocked by conventional techniques with a fusible metal alloy (OSTALLOY 117 from Arconium Corporation of America) joining the polymerized coating to a steel block. After blocking, a removal force of over 6300 g/cm² was required to remove the block from the cured coating. The removal force was measured according to the Shear Lever Load Test described in United States Patent 4,287,013. When a lens blank with no lens coating thereon is blocked with the same metal alloy and steel block, a removal force of 2450 g/cm² is required.

The remaining coated lenses were subjected to a scratch/impact test. The lenses were placed in separate containers along with 5000 g of sharp, heavy objects such as steel bolts, screws and silicon carbide flakes. The lenses and sharp objects, etc. were then tumbled for 10 minutes with the container rotating at a rate of 65 rotations per minute.

The lenses were removed from the containers and the coating stripped therefrom. The coatings were removed in a single piece and left no visible residue on the lens.

The number of surface defects present on each lens was counted by observing the previously coated lens surface with a dark field Quebec Colony Counter available from A. O. Spencer. The average number of defects found per lens was 1. Unprotected lenses subjected to this test have so many defects that one cannot see through them.

### Example 2

Oligomer A was heated to 60°C and applied to the convex surface of polycarbonate ophthalmic lens blanks using a spatula. The coated lenses were heated briefly with a heat gun to cause the oligomer to flow to a smooth coating. The coatings had thicknesses in the range of 150 to 350 micrometers. The oligomer was then cured by electron beam radiation by passing the lenses through an Electro Curtain@ from Energy Sciences, Incorporated. A radiation level of 8 Mrads at 200-250 kV was used.

The coated lenses were then blocked as described in Example 1. A removal force of greater than 6300 g/cm² was required to remove the block from the cured coating. The coatings were then removed from the lenses in a single piece and left no visible residue thereon.

### Examples 3-12

Various oligomeric compositions were prepared and applied to the convex surface of separate polycarbonate ophthalmic lens blanks. Some of the lenses were then blocked and tested for removal force while other lenses were tested for scratch/impact value each as described in Example 1. The formulations of the compositions (in parts by weight) and the test results obtained are given in Table 1. All of the test samples were exposed to ultraviolet light as described in Example 1 except for Example 5. Example 5 was exposed to electron beam radiation as described in Example 2. Upon removal of the cured coating, there was no residue visible on the lens.

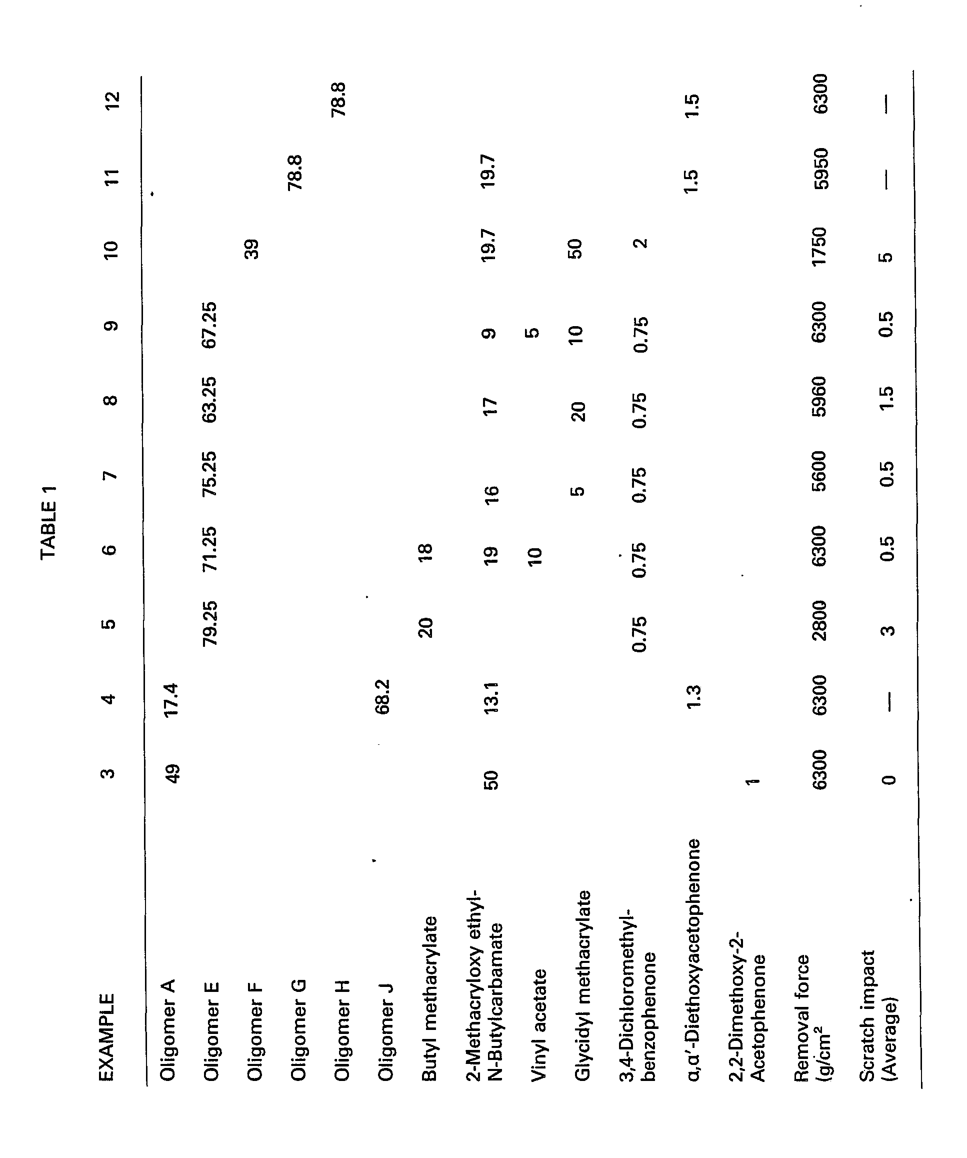

### Examples 13-16

Various oligomeric compositions were prepared and applied to the convex surfaces of separate polycarbonate ophthalmix lens blanks. The coatings were exposed to ultraviolet light as described in Example 1 and the adhesion of the coatings to the lens was then determined using a Scott-CRE/500 (from GCA/Precision Scientific) tensile and compression tester with a 2.27 kg load cell. The lenses were clamped (around their edge) on a horizontally movable platform. One edge of each coating had been peeled away from the lens about 0.9 cm. This edge was clamped in the jaws of the tester. The vertical pull rate of the tester was 25 cm/min. The formulations of the coatings and the test results obtained are given in Table 2.

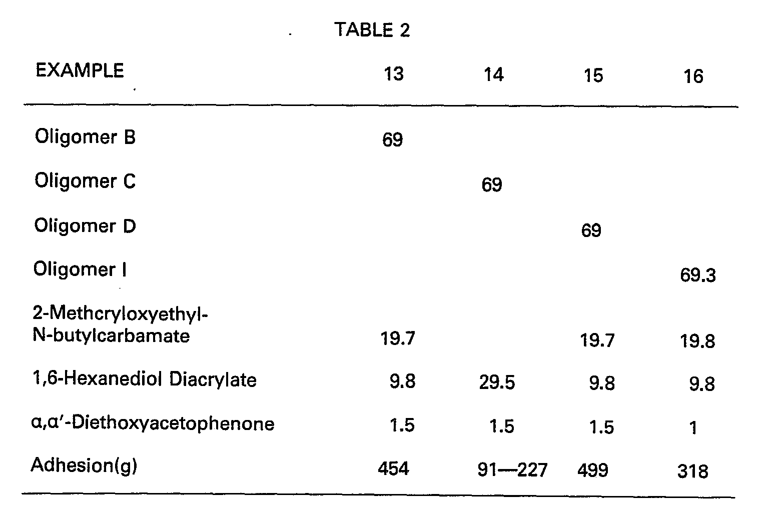

## Claims

1. An ophthalmic lens blank that has a finished surface and, strippably adhered to said finished surface a polymerized layer characterised in that the polymerised layer is made from an oligomeric composition selected from the group consisting of
a) an oligomer that has an amorphous segment at at least two radiation-polymerizable functionalities; and
b) a mixture of (i) an oligomer that has an amorphous segment and one radiation-polymerizable functionality and (ii) a radiation-polymerizable organic material that has at least two radiation-polymerizable functionalities;
wherein the amorphous segment of said oligomers has a weight average molecular weight in the range of 500 to 5,000, a glass transition temperature of less than about 300 K and a crystallinity, as determined by X-ray diffraction, of less than 25% by weight.

2. An opthalmic lens blank according to claim 1 wherein said amorphous segments of said oligomers are selected from polyester segments, polysiloxane segments, polyacrylate segments, polyether segments and polyolefin segments.

3. An opthalmic lens blank according to claim 1 wherein said radiation polymerizable functionalities are selected from acrylyl groups, methacryl groups, allyl groups, vinyl groups and epoxy groups.

4. An opthalmic lens blank according to claim 1 wherein said radiaton polymerizable functionalities are joined to said amorphous segment through a connecting group.

5. An opthalmic lens blank according to claim 4 wherein said connecting group is a urethane group.

6. An opthalmic lens blank according to claim 5 wherein said amorphous segment is a polyester segment.

7. An opthalmic lens blank according to claim 1 wherein said oligomeric composition comprises an oligomer that has an amorphous segment and at least two radiation polymerizable functionalities.

8. An opthalmic lens blank according to claim 7 wherein said oligomer has the structure 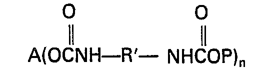 wherein A is said amorphous segment, R' is the residue of an organic diisocyanate, P is said radiation polymerizable functionality and n is a number having a value of up to 7.

9. An opthalmic lens blank according to claim 8 wherein said oligomer has a structure selected from the group consisting of 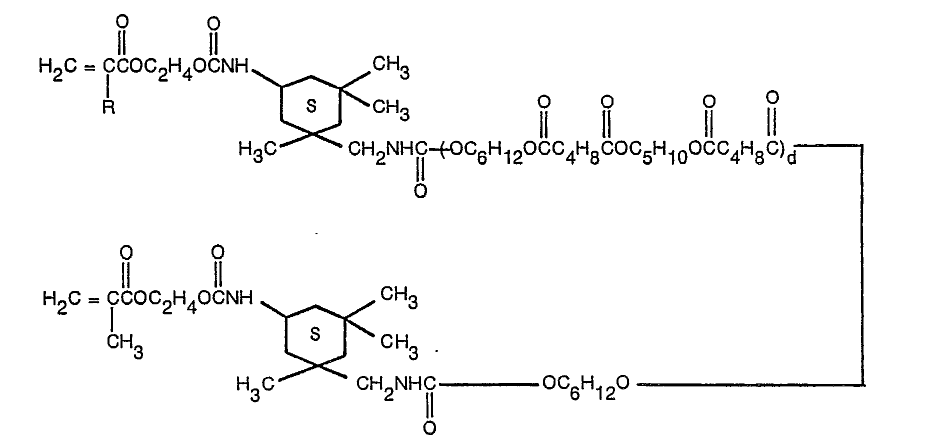 wherein R is hydrogen or methyl and d has an average value of from 0.5 to 7; 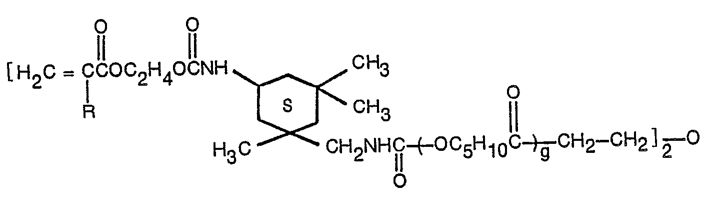 wherein R is hydrogen or methyl and g has an average value of from 1 to 3; 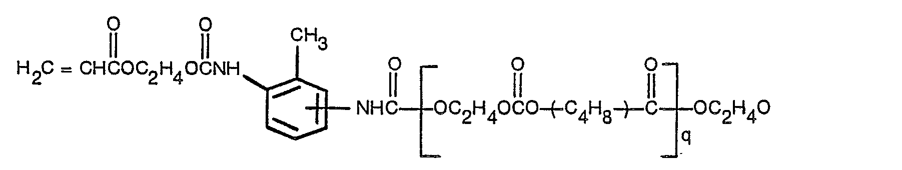 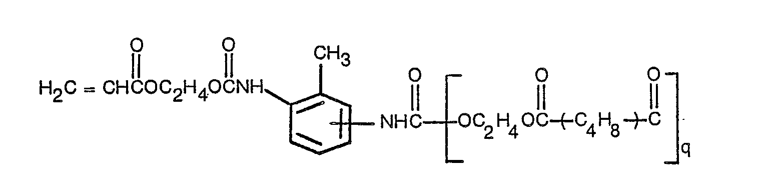 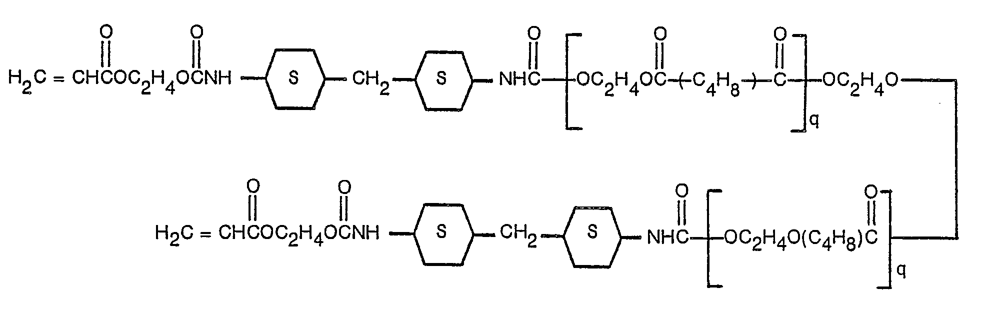 wherein q has an average value of from 1 to 2.

10. An opthalmic lens blank according to claim 9 wherein said oligomer has the structure 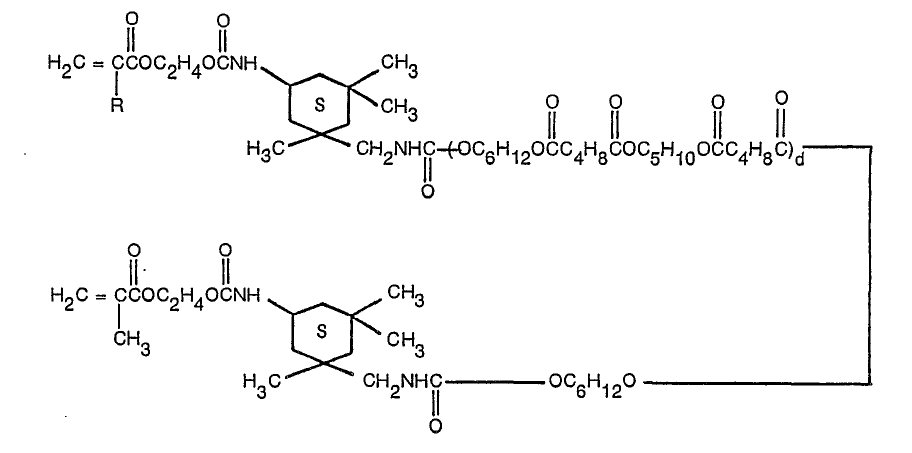 wherein R is hydrogen or methyl and d has an average value of from 0.5 to 7.

11. An opthalmic lens blank according to claim 9 wherein said oligomer has the structure 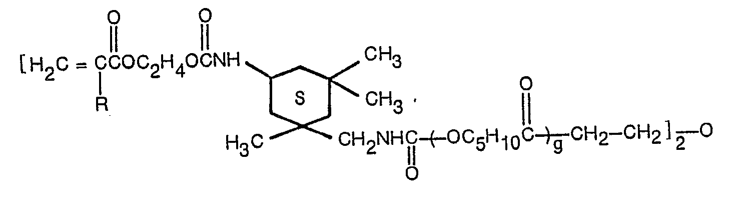 wherein R is hydrogen or methyl and g has an average value of from 1 to 3.

12. An opthalmic lens blank according to claim 1 wherein said radiation polymerizable composition is said mixture of (i) and oligomer that has an amorphous segment and one radiation-polymerizable functionality and (ii) said radiation-polymerizable organic material that has at least two radiation-polymerizable functionalities.

13. An opthalmic lens blank according to claim 1 adhered to a lens block by means of a layer of a fusible metal alloy on said polymer layer.

14. A process for altering the unfinished surface of a semi-finished ophthalmic lens characterised in that it comprises the steps of applying a coating of an oligomeric composition according to claim 1 to the finished surface of said lens, exposing said oligomeric composition to radiation for a time and at an intensity to cause said composition to polymerize on said finished surface;
aligning said lens on a rigid lens block through the polymerized layer of oligomeric composition so that said lens is properly positioned for alteration;
securing said lens block to said polymerized layer of oligomeric composition in said aligned condition; and
altering the unfinished surface of said ophthalmic lens.

## Patentansprüche

1. Augenoptischer Linsenrohling mit einer fertigbearbeiteten Fläche, an der eine polymerisierte Schicht haftet, dadurch gekennzeichnet, daß die polymerisierte Schicht auf der Innenseite einer oligomeren Zusammensetzung angeordnet ist, die aus der Gruppe ausgewählt ist, die aus
a) einem Oligomer, das ein amorphes Segment und mindestens zwei strahlungspolymerisierbare Funktionalitäten besitzt, und
b) einem Gemisch aus (i) einem Oligomer, das ein amorphes Segment und eine strahlungspolymerisierbare Funktionalität besitzt und (ii) einer strahlungspolymerisierbaren organischen Substanz, die mindestens zwei strahlungspolymerisierbare Funktionalitäten besitzt, besteht, wobei das amorphe Segment der Oligomere ein gewichtsdurchschnittliches Molekulargewicht im Bereich von 500 bis 5000, eine Einfriertemperatur unter etwa 300 K und eine durch Röntgenbeugung bestimmte Kristallinität unter 25 Gew.% besitzt.

2. Augenoptischer Linsenrohling nach Anspruch 1, dadurch gekennzeichnet, daß die amorphen Segmente der Oligomere aus den Polyestersegmenten, Polysiloxansegmenten, Polyacrylatsegmenten, Polyethersegmenten und Polyolefinsegmenten ausgewählt sind.

3. Augenoptischer Linsenrohling nach Anspruch 1, dadurch gekennzeichnet, daß die strahlungspolymerisierbaren Funktionalitäten aus den Acrylylgruppen, Methacrylgruppen, Allylgruppen, Vinylgruppen und Epoxidgruppen ausgewählt sind.

4. Augenoptischer Linsenrohling nach Anspruch 1, dadurch gekennzeichnet, daß die strahlungspolymerisierbaren Funktionalitäten über eine Verbindungsgruppe mit dem amorphen Segment verbunden sind.

5. Augenoptischer Linsenrohling nach Anspruch 4, dadurch gekennzeichnet, daß die Verbindungsgruppe eine Urethangruppe ist.

6. Augenoptischer Linsenrohling nach Anspruch 5, dadurch gekennzeichnet, daß das amorphe Segment ein Polyestersegment ist.

7. Augenoptischer Linsenrohling, nach Anspruch 1, dadurch gekennzeichnet, daß die oligomere Zusammensetzung mindestens teilweise aus einem Oligomer besteht, das ein amorphes Segment und mindestens zwei strahlungspolymerisierbare funktionalitäten besitzt.

8. Augenoptischer Linsenrohling, nach Anspruch 7, dadurch gekennzeichnet, daß das Oligomer die Struktur 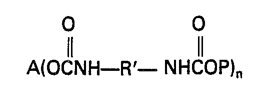 hat, in der A das amorphe Segment ist, R' der Rest eines organischen Diisocyanats, P die strahlungspolymerisierbare Funktionalität und n eine Zahl mit einem Wert von bis zu 7.

9. Augenoptischer Linsenrohling, nach Anspruch 8, dadurch gekennzeichnet, daß das Oligomer eine Struktur hat, die aus der Gruppe ausgewählt ist, die besteht aus 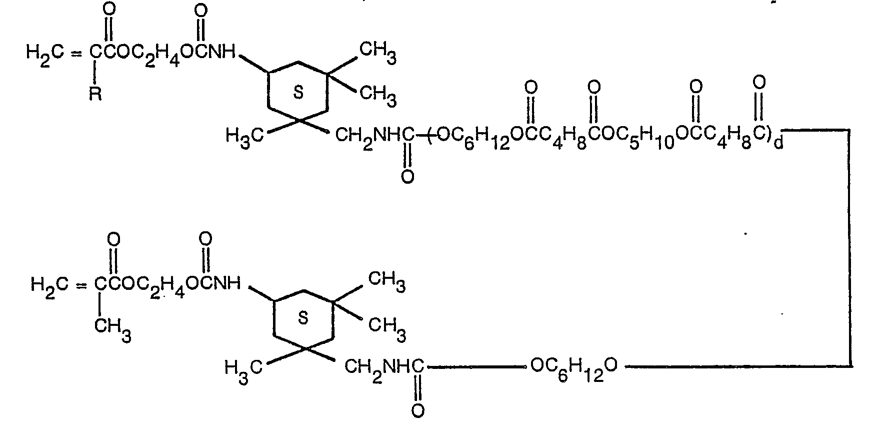 wobei R Wasserstoff oder Methyl ist und d einen Durchschnittswert von etwa 0,5 bis 7 hat; 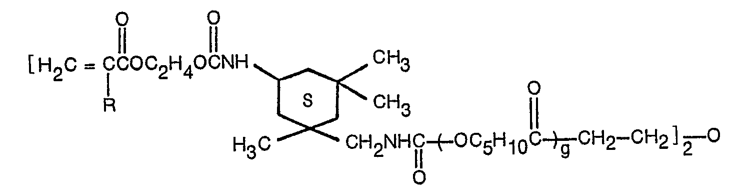 wobei R Wasserstoff ofer Methyl ist und g einen Durchschnittswert von 1 bis 3 hat, 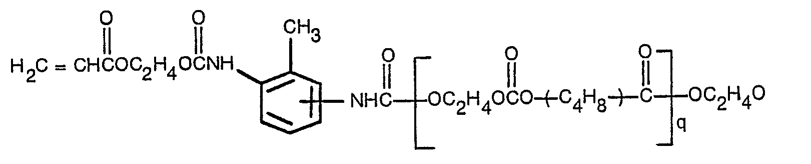 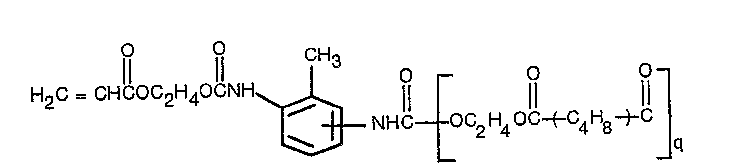 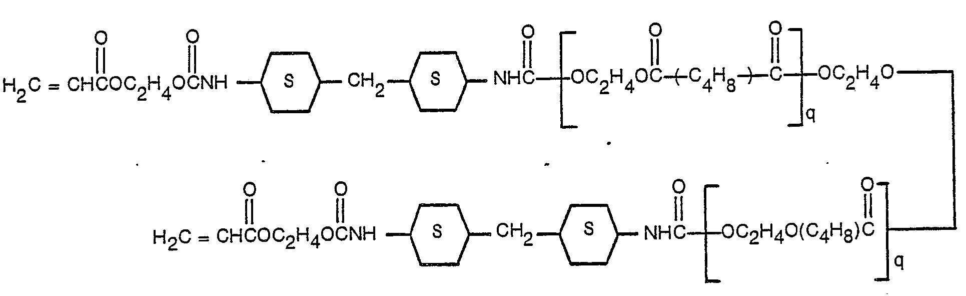 wobei q einen Durchschnittswert von 1 bis 2 hat.

10. Augenoptischer Linsenrohling, nach Anspruch 9, dadurch gekennzeichnet, daß das Oligomer die Struktur 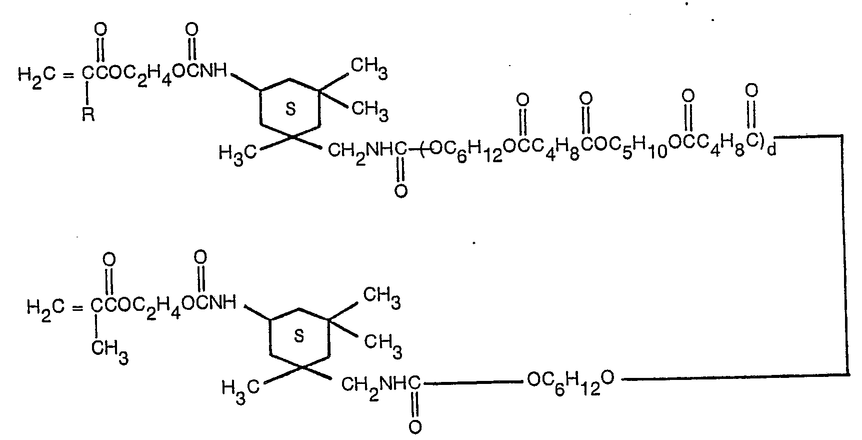 hat, in der R Wasserstoff oder Methyl ist und d einen Durchschnittswert von 0,5 bis 7 hat.

11. Augenoptischer Linsenrohling, nach Anspruch 9, dadurch gekennzeichnet, daß das Oligomer die Struktur 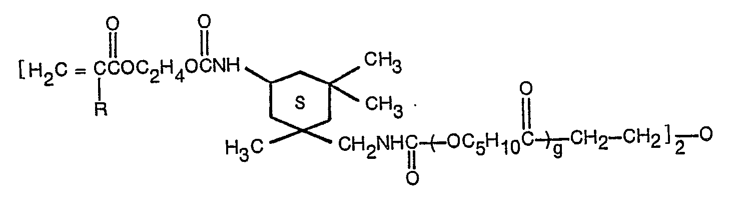 hat, in der R Wasserstoff oder Methyl ist und g einen Durchschnittswert von 1 bis 3 hat.

12. Augenoptischer Linsenrohling, nach Anspruch 1, dadurch gekennzeichnet, daß die strahlungspolymerisierbare Zusammensetzung das genannte Gemisch aus (i) einem Oligomer mit einem amorphen Segment und einer strahlungspolymerisierbaren Funktionalität und (ii) dem genannten strahlungspolymerisierbaren organischen Substanz mit mindestens zwei strahlungspolymerisierbaren Funktionalitäten ist.

13. Augenoptischer Linsenrohling, nach Anspruch 1, der mit einem Linsenblock mittels einer auf der Polymerschicht vorgesehenen Schicht aus einer schmelzbaren Metallegierung verklebt ist.

14. Verfahren zum Ändern der nicht fertigbearbeiteten Fläche einer vorbearbeiteten augenoptischen Linse, gekennzeichnet durch folgende Schritte:
Auf die fertigbearbeitete Fläche der Linse wird ein Überzug aus einer oligomeren Zusammensetzung nach Anspruch 1 aufgetragen,
die oligomere Zusammensetzung wird so lange einer Strahlung einer solchen Intensität ausgesetzt, daß die Zusammensetzung auf der fertigbearbeiteten Fläche polymerisiert,
auf einem starren Linsenblock wird die Linse über die polymerisierte Schicht auf der oligomeren Zusammensetzung derart ausgerichtet, daß die Linse für die Änderung richtig positioniert ist,
der Linsenblock wird an der in dem ausgerichteten Zustand befindlichen, polymerisierten Schicht der oligomeren Zusammensetzung befestigt, und
die nicht fertigbearbeitete Fläche der augenoptischen Linse wird verändert.

## Revendications

1. Ebauche de lentille ophtalmique ayant une surface finie et, adhérant à la dite surface de façon amovible, une couche polymérisée, caractérisée en ce que la couche polymérisée est faite d'une composition oligomère choisie parmi l'ensemble constitué par:
a) un oligomère qui a un segment amorphe et au moins deux fonctionnalités polymérisables par irradiation; et
b) un mélange (i) d'un oligomère qui a un segment amorphe et une fonctionnalité polymérisable par irradiation, et (ii) d'une matière organique polymérisable par irradiation qui a au moins deux fonctionnalités polymérisables par irradiation
le segment amorphe desdits oligomères ayant une moyenne pondérable du poids moléculaire dans la gamme de 500 à 5000, une température de transition vitreuse inférieure à environ 300 K et une cristallinité, déterminée par diffraction de rayons X, inférieure à 25% en poids.

2. Ebauche de lentille ophtalmique selon la revendication 1 dans laquelle lesdits segments amorphes desdits oligomères sont choisis parmi les segments de polyester, les segments de polysiloxane, les segments de polyacrylate, les segments de polyéther et les segments de polyoléfine.

3. Ebauche de lentille ophtalmique selon la revendication 1 dans laquelle lesdites fonctionnalités polymérisables par irradiation sont choisies parmi les groupes acrylyle, les groupes méthacrylyle, les groupes allyle, les groupes vinyle et les groupes époxy.

4. Ebauche de lentille ophtalmique selon la revendication 1, dans laquelle lesdites fonctionnalités polymérisables par irradiation sont unies audit segment amorphe par un groupe de raccordement.

5. Ebauche de lentille ophtalmique selon la revendication 4 dans laquelle ledit groupe de raccordement est un groupe uréthane.

6. Ebauche de lentille ophtalmique selon la revendication 5 dans laquelle ledit segment amorphe est un segment de polyester.

7. Ebauche de lentille ophtalmique selon la revendication 1 dans laquelle ladite composition oligomère comprend un oligomère qui a un segment amorphe et au moins deux fonctionnalités polymérisables par irradiation.

8. Ebauche de lentille ophtalmique selon la revendication 7 dans laquelle ledit oligomère a pour structure 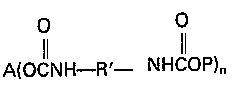 où A est ledit segment amorphe, R' est le reste d'un diisocyanate organique, P est ladite fonctionnalité polymérisable par irradiation et n est un nombre ayant une valeur jusqu'à 7.

9. Ebauche de lentille ophtalmique selon la revendication 8 dans laquelle ledit oligomère a une structure choisie parmi l'ensemble constitué par 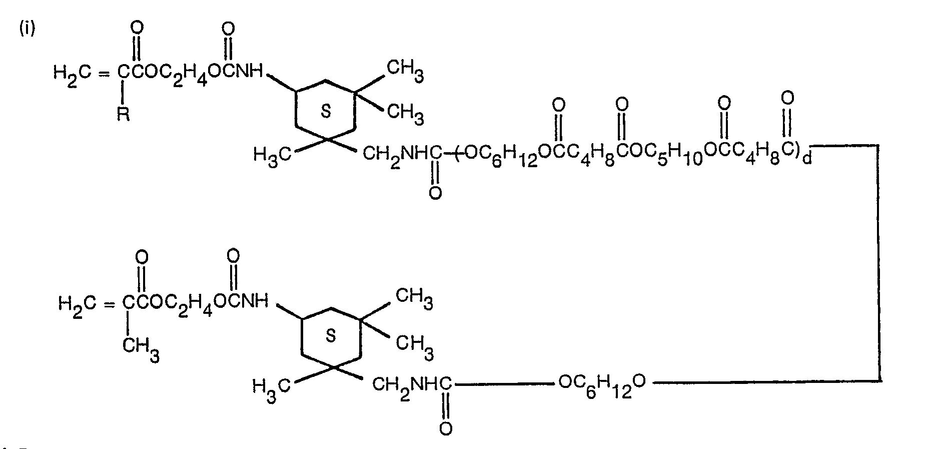 où R est H ou CH₃ et d a une valeur moyenne d'environ 0,5 à 7; 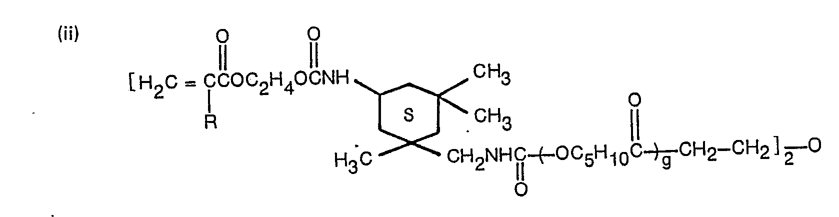 où R est H ou CH₃ et g a une valeur moyenne de 1 à 3; et 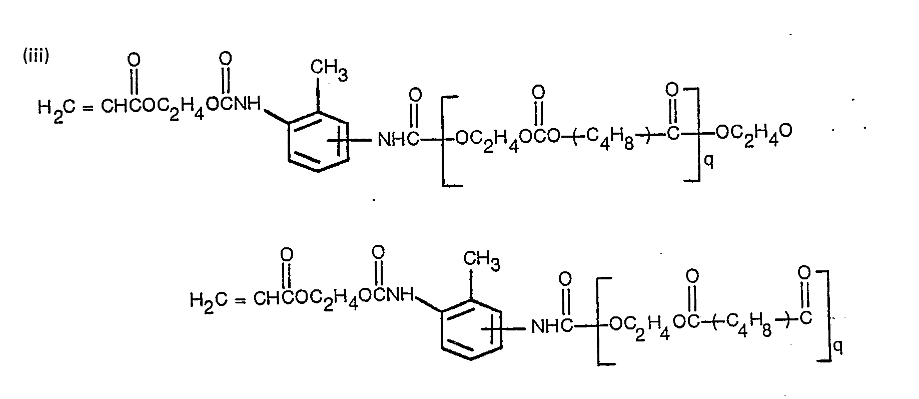 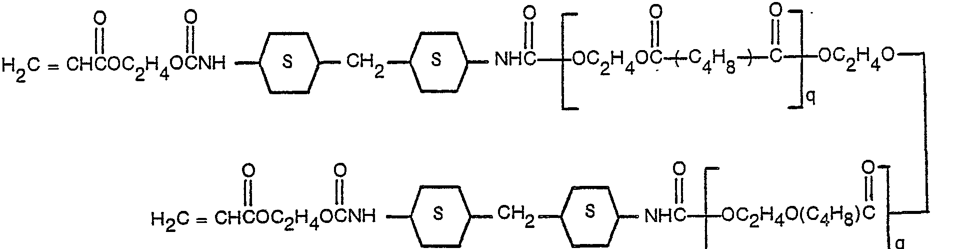 où q a une valeur moyenne de 1 à 2.

10. Ebauche de lentille ophtalmique selon la revendication 9, dans laquelle ledit oligomère a pour structure 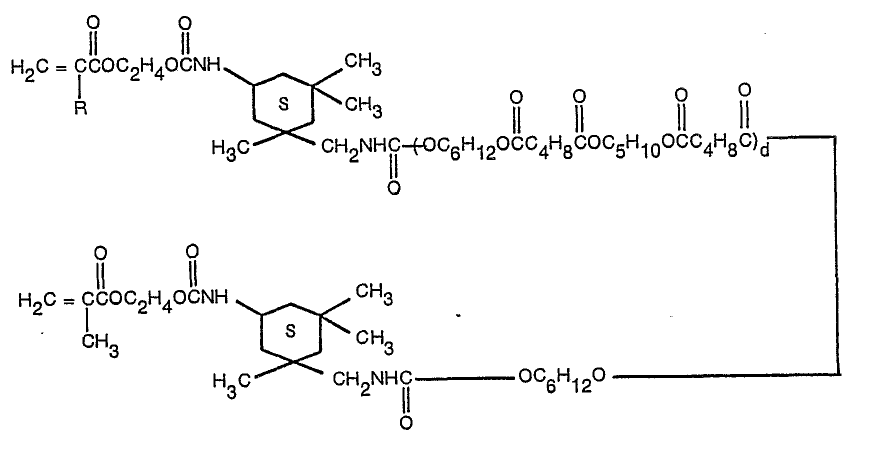 où R est H ou CH₃ et d a une valeur moyenne de 0,5 à 7.

11. Ebauche de lentille ophtalmique selon la revendication 9 dans laquelle ledit oligomère a pour structure 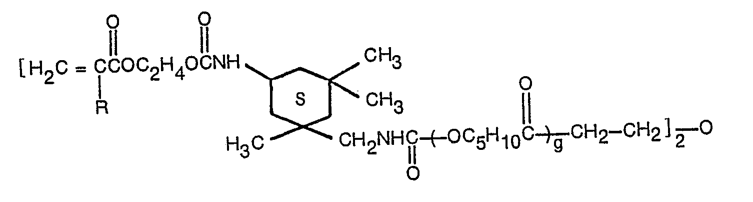 où R est H ou CH₃ et g a une valeur moyenne de 1 à 3.

12. Ebauche de lentille ophtalmique selon la revendication 1, dans laquelle ladite composition polymérisable par irradiation est ladit mélange (i) d'un oligomère ayant un segment amorphe et une fonctionnalité polymérisable par irradiation et (ii) de ladite matière organique polymérisable par irradiation ayant au moins deux fonctionnalités polymérisables par irradiation.

13. Ebauche de lentille ophtalmique selon la revendication 1 adhérant à un bloc pour lentille au moyen d'une couche d'un alliage métallique fusible sur ladite couche polymère.

14. Procédé pour modifier la surface non finie d'une lentille ophtalmique semi-finie caractérisé en ce qu'il comprend les stades suivants:
application d'un revêtement d'une composition oligomère selon la revendication 1 à la surface finie de ladite lentille;
exposition de ladite composition oligomère à une irradiation pendant une durée et avec une intensité provoquant la polymérisation de ladite composition sur ladite surface finie;
alignement de ladite lentille sur un bloc rigide pour lentille par l'intermédiaire de la couche polymérisée de la composition oligomère afin que ladite lentille soit convenablement positionnée pour être modifiée;
assujettissement dudit bloc pour lentille à ladite couche polymérisée de composition oligomère dans ledit état aligné et
modification de la surface non finie de ladite lentille ophtalmique.
